(19) Europäisches Patentamt
European Patent Office
Office européen des brevets

(11) **EP 4 232 345 B1**

(12) **EUROPÄISCHE PATENTSCHRIFT**

(45) Veröffentlichungstag und Bekanntmachung des Hinweises auf die Patenterteilung:
**15.10.2025 Patentblatt 2025/42**

(21) Anmeldenummer: **21806703.1**

(22) Anmeldetag: **05.11.2021**

(51) Internationale Patentklassifikation (IPC):
**B62D 35/02** *(2006.01)* **B62D 37/02** *(2006.01)*
**B62D 35/00** *(2006.01)*

(52) Gemeinsame Patentklassifikation (CPC):
**B62D 37/02; B62D 35/005;** B62D 35/02;
Y02T 10/82; Y02T 10/88

(86) Internationale Anmeldenummer:
**PCT/EP2021/080736**

(87) Internationale Veröffentlichungsnummer:
**WO 2022/122260 (16.06.2022 Gazette 2022/24)**

(54) **LUFTLEITEINRICHTUNG FÜR EINEN KRAFTWAGEN, INSBESONDERE FÜR EINEN PERSONENKRAFTWAGEN, SOWIE KRAFTWAGEN**

AIR-GUIDING DEVICE FOR A MOTOR VEHICLE, IN PARTICULAR FOR A PASSENGER CAR, AND MOTOR VEHICLE

DISPOSITIF DE GUIDAGE D'AIR POUR VÉHICULE À MOTEUR, EN PARTICULIER POUR UNE VOITURE AUTOMOBILE ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2020 DE 102020007450**

(43) Veröffentlichungstag der Anmeldung:
**30.08.2023 Patentblatt 2023/35**

(73) Patentinhaber: **Mercedes-Benz Group AG
70372 Stuttgart (DE)**

(72) Erfinder: **ARNOLD, Benjamin
70563 Stuttgart (DE)**

(74) Vertreter: **Novagraaf Group
Chemin de l'Echo 3
1213 Onex / Geneva (CH)**

(56) Entgegenhaltungen:
**WO-A1-2011/126069 DE-A1- 102009 040 678
DE-A1- 102016 006 145**

• **DER SPIEGEL ET AL: "Warum das Potenzial der Aerodynamik längst nicht ausgeschöpft wird - DER SPIEGEL", SPIEGEL ONLINE (SPIEGEL.DE) MOBILITÄT VOM 16.03.2013 07:10 UHR, 16 March 2013 (2013-03-16), Spiegel online, pages 1 - 11, XP055887719, Retrieved from the Internet <URL:https://www.spiegel.de/fotostrecke/warum-das-potenzial-der-aerodynamik-laengst-nicht-ausgeschoepft-wird-fotostrecke-93111.html> [retrieved on 20220204]**

**Beschreibung**

Die Erfindung betrifft eine Luftleiteinrichtung für einen Kraftwagen, insbesondere für einen Personenkraftwagen, gemäß dem Oberbegriff des Anspruchs 1. Des Weiteren betrifft die Erfindung einen Kraftwagen, insbesondere einen Personenkraftwagen, mit wenigstens einer solchen Luftleiteinrichtung.

Die DE 10 2009 040 678 A1 offenbart eine Luftleiteinrichtung für einen Kraftwagen, mit einem im Bereich vor einem korrespondierenden Rad anordenbaren Radspoiler, welcher in seiner Einbaulage gegenüber einem angrenzenden Unterbodenbereich des Kraftwagens in Fahrzeughochrichtung nach unten absteht und an seiner nach unten gewandten Seite eine Luftleitkante aufweist. Die Luftleitkante des Radspoilers ist in einem Längenbereich ungerade ausgebildet und Erhöhungen und Vertiefungen aufweist.

Aufgabe der vorliegenden Erfindung ist es, eine Luftleiteinrichtung für einen Kraftwagen sowie einen Kraftwagen mit einer solchen Luftleiteinrichtung zu schaffen, sodass eine besonders vorteilhafte Aerodynamik des Kraftwagens realisiert werden kann.

Diese Aufgabe wird erfindungsgemäß durch eine Luftleiteinrichtung mit den Merkmalen des Anspruchs 1 sowie durch einen Kraftwagen mit den Merkmalen des Anspruchs 6 gelöst. Vorteilhafte Ausgestaltungen mit zweckmäßigen Weiterbildungen der Erfindung sind Gegenstand der abhängigen Ansprüche.

Ein erster Aspekt der Erfindung betrifft eine Luftleiteinrichtung für einen vorzugsweise als Personenkraftwagen ausgebildeten Kraftwagen. Die Luftleiteinrichtung umfasst wenigstens einen in Fahrzeuglängsrichtung vor einem korrespondierenden, auch als Fahrzeugrad bezeichneten Rad des Kraftwagens anordenbaren Radspoiler, welcher in seiner Einbaulage gegenüber einem angrenzenden Unterbodenbereich des Kraftwagens in Fahrzeughochrichtung nach unten absteht. Der Radspoiler nimmt seine Einbaulage in vollständig hergestelltem Zustand des Kraftwagens und somit dann ein, wenn der Radspoiler an dem Kraftwagen beziehungsweise an einer Komponente des Kraftwagens gehalten ist. In der Einbaulage des Radspoilers, das heißt in vollständig hergestelltem Zustand des Kraftwagens, grenzt der Unterbodenbereich beispielsweise in Fahrzeugquerrichtung und/oder in Fahrzeuglängsrichtung an den Radspoiler an, welcher in seiner Einbaulage in Fahrzeughochrichtung nach unten von dem Unterbodenbereich absteht, mithin den Unterbodenbereich in Fahrzeughochrichtung nach unten hin überragt. An seiner in der Einbaulage in Fahrzeughochrichtung nach unten gewandten und auch als Unterseite bezeichneten Seite weist der Radspoiler eine in Fahrzeugquerrichtung verlaufende Luftleitkante auf, welche auch als Unterkante bezeichnet wird. Dabei ist es vorzugsweise vorgesehen, dass der Radspoiler in seiner Einbaulage, das heißt bezogen auf seine Einbaulage in Fahrzeughochrichtung nach unten hin an der Luftleitkante endet. Insbesondere kann vorgesehen sein, dass in der Einbaulage des Radspoilers die Luftleitkante in Fahrzeughochrichtung nach unten betrachtet die tiefste Stelle des Radspoilers ist beziehungsweise bildet.

Die Luftleitkante weist wenigstens einen geraden, ersten Längenbereich auf. Unter dem Merkmal, dass der erste Längenbereich gerade ist, ist zu verstehen, dass die Luftleitkante in dem ersten Längenbereich zumindest im Wesentlichen linear beziehungsweise linienförmig ausgebildet ist oder verläuft, so dass die Luftleitkante in dem geraden, ersten Längenbereich keine in der Einbaulage des Radspoilers in Fahrzeugquerrichtung abwechselnd aufeinanderfolgend angeordnete und sich in Fahrzeughochrichtung erstreckende Erhebungen und Vertiefungen aufweist. Des Weiteren weist die Luftleitkante einen sich in der Einbaulage des Radspoilers in Fahrzeugquerrichtung direkt an den geraden, ersten Längenbereich anschließenden, ungeraden, zweiten Längenbereich auf. Unter dem Merkmal, dass sich in der Einbaulage des Radspoilers der zweite Längenbereich in Fahrzeugquerrichtung direkt an den ersten Längenbereich anschließt, ist zu verstehen, dass bezogen auf die Einbaulage des Radspoilers in Fahrzeugquerrichtung zwischen dem ersten Längenbereich und dem zweiten Längenbereich kein anderer, weiterer Längenbereich der Luftleitkante angeordnet ist. Unter dem Merkmal, dass der zweite Längenbereich ungerade ausgebildet ist, ist zu verstehen, dass der ungerade, zweite Längenbereich nicht-linear beziehungsweise nicht-linienförmig ausgebildet ist oder verläuft, mithin sich nicht etwa bezogen auf die Einbaulage des Radspoilers in Fahrzeugquerrichtung linear oder linienförmig erstreckt.

Um nun eine besonders vorteilhafte Aerodynamik des Kraftwagens realisieren zu können, ist es erfindungsgemäß vorgesehen, dass sich der gerade, erste Längenbereich der Luftleitkante in der Einbaulage des Radspoilers in Fahrzeugquerrichtung nach innen hin direkt an den ungeraden, zweiten Längenbereich anschließt. Umgekehrt ausgedrückt, schließt sich der ungerade, zweite Längenbereich der Luftleitkante in der Einbaulage des Radspoilers in Fahrzeugquerrichtung nach außen hin direkt an den geraden, ersten Längenbereich an. Wieder mit anderen Worten ausgedrückt ist in der Einbaulage des Radspoilers der ungerade, zweite Längenbereich in Fahrzeugquerrichtung weiter außen angeordnet als der gerade, erste Längenbereich. Außerdem ist es erfindungsgemäß vorgesehen, dass in der Einbaulage des Radspoilers der ungerade, zweite Längenbereich in Fahrzeuglängsrichtung nach hinten hin zumindest teilweise durch das korrespondierende, sich in seiner Geradeausstellung befindende Rad überdeckt ist. Umgekehrt ausgedrückt ist es erfindungsgemäß vorgesehen, dass in der Einbaulage des Radspoilers, das heißt in vollständig hergestelltem Zustand des Kraftwagens, das Rad in Fahrzeuglängsrichtung nach vorne hin durch zumindest einen Teil des ungeraden, zweiten Längenbereichs überdeckt ist. Hierdurch kann beispielsweise bei einer Vorwärtsfahrt des Kraftwagens im Vergleich zu herkömmlichen Lösungen eine aerodynamische Verbesserung einer Radumströmung realisiert werden. Unter der Radumströmung ist zu verstehen, dass bei der Vorwärtsfahrt des Kraftwagens Luft das Rad, insbesondere in Fahrzeuglängsrichtung von vorne nach hinten, umströmt. Mittels des ungeraden, zweiten Längenbereichs wird die Radumströmung beziehungsweise die das Rad umströmende Luft besonders vorteilhaft beeinflusst, so dass das Rad besonders strömungsgünstig von der Luft umströmt wird. Insgesamt kann durch die erfindungsgemäße Luftleiteinrichtung im Vergleich zu herkömmlichen Lösungen eine Reduktion des Luftwiderstandes des Kraftwagens realisiert werden, sodass der Kraftwagen besonders energiegünstig, das heißt beispielsweise besonders kraftstoffverbrauchsgünstig betrieben werden kann.

Unter der Geradeausstellung des Rads ist eine solche Stellung des Rads zu verstehen, durch welche eine Geradeausfahrt des Kraftwagens bewirkbar ist beziehungsweise bewirkt wird. Das Rad kann ein gelenktes oder lenkbares Rad und somit um eine insbesondere zumindest im Wesentlichen in Fahrzeughochrichtung verlaufende Lenkachse relativ zu einem beispielsweise als selbsttragende Karosserie ausgebildeten Aufbau des Kraftwagens verschwenkbar sein, um dadurch beispielsweise bei der zuvor genannten Vorwärtsfahrt des Kraftwagens Kurvenfahrten und/oder Richtungsänderungen des Kraftwagens zu bewirken. Somit kann das Rad beispielsweise um die Schwenkachse in mehrere, voneinander unterschiedliche Schwenkstellungen verschwenkt werden. Eine der Schwenkstellungen ist die Geradeausstellung, in welche das Rad geschwenkt wird, um Spurwechsel und Richtungsänderungen des Kraftwagens zu vermeiden beziehungsweise um eine oder die zuvor genannte Geradeausfahrt des Kraftwagens zu bewirken. Insbesondere kann das Rad ein Vorderrad sein. Denkbar ist es jedoch auch, dass das Rad ein Hinterrad ist, insbesondere im Hinblick auf eine Hinterachslenkung. Ferner ist es denkbar, dass das Rad ein nicht-gelenktes, das heißt ein nicht-lenkbares Rad ist, mittels welchem somit keine Richtungsänderungen und Kurvenfahrten des Kraftwagens bewirkt werden können. Somit befindet sich das Rad stets in seiner Geradeausstellung. Das auch als Fahrzeugrad bezeichnete Rad ist ein Bodenkontaktelement des Kraftwagens, welches in seinem vollständig hergestellten Zustand in Fahrzeughochrichtung nach unten hin über das Rad an einem Boden abstützbar oder abgestützt ist. Dabei berührt das Rad, insbesondere dessen Reifen, den Boden direkt. Wird der Kraftwagen entlang des Bodens vorwärts gefahren, während der Kraftwagen in Fahrzeughochrichtung nach unten hin über das Rad an dem Boden abgestützt ist, so rollt das Rad entlang des Bodens beziehungsweise an dem Boden ab. Dabei nimmt das Rad seine Geradeausstellung insbesondere dann ein, wenn der Kraftwagen in seinem vollständig hergestellten Zustand in Fahrzeughochrichtung nach unten über das Rad an dem Boden abgestützt ist und stillsteht und insbesondere eine zum Bewirken von Kurvenfahrten und Richtungsänderungen des Kraftwagens ausgebildete Lenkung des Kraftwagens eingestellt ist, um eine beziehungsweise die zuvor genannte Geradeausfahrt zu bewirken.

Die Erfindung basiert insbesondere auf den Überlegungen, dass der Luftwiderstand eines Kraftwagens hinsichtlich Reichweite und Verbrauch, insbesondere bei höheren Fahrgeschwindigkeiten, eine große Rolle spielt. Dabei trägt die Umströmung von Rädern mit Luft einen signifikanten Beitrag zum Gesamtluftwiderstand eines Fahrzeugs bei. Radspoiler, die in Fahrzeuglängsrichtung vor den Rädern, das heißt in Strömungsrichtung der die Räder in Fahrzeuglängsrichtung von vorne nach hinten umströmenden Luft stromauf der Räder angeordnet sind, können die Radumströmung aerodynamisch positiv beeinflussen und zu einer deutlichen Reduktion des Gesamtluftwiderstands führen im Vergleich zu Ausführungsformen, bei welchen die Fahrzeuge nicht mit solchen Radspoilern ausgestattet sind. Im Vergleich zu konventionellen Radspoilern kann durch die Erfindung eine deutliche, weitere Reduktion des Luftwiderstands herbeigeführt werden, so dass der Kraftwagen besonders effizient angetrieben werden kann.

Um eine besonders vorteilhafte Radumströmung und somit eine besonders vorteilhafte Aerodynamik des Kraftwagens realisieren zu können, ist es erfindungsgemäß weiterhin vorgesehen, dass der ungerade, zweite Längenbereich mehrere, in der Einbaulage des Radspoilers in Fahrzeugquerrichtung abwechselnd aufeinanderfolgende Erhebungen und Vertiefungen aufweist.

Dabei hat es sich als besonders vorteilhaft gezeigt, wenn die jeweilige, auch als Vorsprung bezeichnete Erhebung und/oder die jeweilige Vertiefung eine insbesondere in der Einbaulage des Radspoilers zumindest im Wesentlichen in Fahrzeughochrichtung, das heißt zumindest im Wesentlichen parallel zur Fahrzeughochrichtung, oder schräg zur Fahrzeughochrichtung verlaufende Höhe und eine senkrecht zu der Höhe verlaufende Breite aufweist, welche beispielsweise zumindest im Wesentlichen in Fahrzeugquerrichtung, das heißt zumindest im Wesentlichen parallel zur Fahrzeugquerrichtung oder schräg zur Fahrzeugquerrichtung verläuft. Insbesondere verläuft die Höhe in eine erste Richtung, und die Breite verläuft in eine senkrecht zur ersten Richtung verlaufende zweite Richtung, wobei die erste Richtung und die zweite Richtung eine erste Ebene aufspannen, welche beispielsweise parallel zu einer in der Einbaulage des Radspoilers durch die Fahrzeugquerrichtung und die Fahrzeughochrichtung aufgespannten, zweiten Ebene verläuft oder mit der zweiten Ebene zusammenfällt. Alternativ oder zusätzlich verläuft bezogen auf die Einbaulage des Radspoilers die Fahrzeuglängsrichtung senkrecht zu der ersten, durch die erste Richtung und die zweite Richtung aufgespannten Ebene. Diesbezüglich hat es sich als besonders vorteilhaft gezeigt, wenn der Quotient aus der Breite als Dividend und der Höhe als Divisor in einem Bereich von einschließlich 0,5 bis einschließlich 2 liegt. Mit anderen Worten, wird die Breite beispielsweise mit λ bezeichnet, während die Höhe mit I bezeichnet wird, so gilt vorzugsweise:

$$0{,}5 \leq \lambda / I \leq 2$$

Um eine besonders vorteilhafte Aerodynamik realisieren zu können, ist es erfindungsgemäß vorgesehen, dass der ungerade, zweite Längenbereich gezackt ausgebildet ist. Die Erhebungen sind somit Zacken, die in Fahrzeugquerrichtung nebeneinander angeordnet sind und dadurch die zwischen jeweils zwei benachbarten Zacken angeordneten, auch als Ausnehmungen bezeichneten Vertiefungen bilden beziehungsweise in Fahrzeugquerrichtung nach außen beidseitig begrenzen. Hierdurch kann die Radumströmung besonders vorteilhaft beeinflusst werden.

Zur Realisierung einer besonders vorteilhaften Radumströmung als vorteilhaft gezeigt, wenn in der Einbaulage des Radspoilers der gerade, erste Längenbereich vollständig in Fahrzeugquerrichtung nach innen hin versetzt zu dem sich in seiner Geradeausstellung befindenden Rad angeordnet ist. Dies bedeutet, dass es vorzugsweise vorgesehen ist, dass in der Einbaulage des Radspoilers das Rad in Fahrzeuglängsrichtung nach vorne hin nicht durch den geraden, ersten Längenbereich überdeckt ist. Ferner ist es denkbar, dass das Rad beziehungsweise ein Teil des Rades in der Einbaulage des Radspoilers in Fahrzeuglängsrichtung nach vorne hin durch den geraden, dritten Längenbereich überdeckt ist.

Erfindungsgemäß ist ferner vorgesehen, dass in der Einbaulage des Radspoilers eine sich in Fahrzeugquerrichtung erstreckende Breite des sich in seiner Geradeausstellung befindenden Rads zumindest überwiegend, das heißt zumindest zu mehr als zur Hälfte in Fahrzeuglängsrichtung nach vorne hin durch den ungeraden, zweiten Längenbereich überdeckt, wodurch das Rad bei einer Vorwärtsfahrt des Kraftwagens besonders vorteilhaft von Luft umströmt wird.

Mittels des Radspoilers und dabei insbesondere mittels des ungeraden, zweiten Längenbereichs kann eine Turbulenz in die bei einer Vorwärtsfahrt des Kraftwagens den Radspoiler und das Rad in Fahrzeuglängsrichtung von vorne nach hinten umströmende Luft, insbesondere in deren Strömung eingebracht werden. Diese Turbulenz führt einer Grenzschichtströmung entlang einer Reifenflanke des Rades Energie zu. Die hierdurch turbulentere, auch als Reifengrenzschichtströmung bezeichnete Grenzschichtströmung ist in der Lage, einen vorteilhaft großen Druckanstieg zu überwinden und bleibt dadurch länger an dem Rad anliegend. Hierdurch ergibt sich im Vergleich zu herkömmlichen Lösungen eine aerodynamisch verbesserte Radumströmung, und Strömungsverluste durch abgelöste Strömung können im Vergleich zu herkömmlichen Lösungen reduziert werden. In Summe führt dies im Vergleich zu herkömmlichen Lösungen zu einer Reduktion des Gesamtluftwiderstands des Kraftwagens. Im Gegensatz zu herkömmlichen Lösungen, bei denen eine Stabilisierung einer weiter innen liegenden Scherschicht das Ziel ist, erfolgt durch die Erfindung eine gezielte Erzeugung von Turbulenz der Strömung der bei einer Vorwärtsfahrt das Rad umströmenden Luft, wodurch eine besonders vorteilhafte Aerodynamik dargestellt werden kann.

Eine weitere Ausführungsform zeichnet sich dadurch aus, dass in der Einbaulage des Radspoilers ein in Fahrzeughochrichtung verlaufender, auch als erster Bodenabstand bezeichneter erster Abstand zwischen dem geraden, ersten Längenbereich und dem Boden, auf welchem der Kraftwagen steht, mithin an welchem der Kraftwagen über das Rad in Fahrzeughochrichtung nach unten abgestützt ist, größer ist als ein in Fahrzeughochrichtung verlaufender, auch als zweiter Bodenabstand bezeichneter, zweiter Abstand zwischen dem ungeraden, zweiten Längenbereich und dem Boden. Hierdurch kann die das Rad bei einer Vorwärtsfahrt des Kraftwagens in Fahrzeuglängsrichtung von vorne nach hinten anströmende Luft mittels des Radspoilers besonders vorteilhaft beeinflusst werden, so dass sich eine besonders gute Radumströmung darstellen lässt.

Um die Radumströmung besonders vorteilhaft einstellen beziehungsweise beeinflussen zu können, ist es in weiterer Ausgestaltung der Erfindung vorgesehen, dass in der Einbaulage des Radspoilers zumindest ein überwiegender Teil, das heißt mehr als die Hälfte, vorzugsweise lediglich mehr als ein Viertel, insbesondere lediglich mehr als ein Drittel einer beziehungsweise der in Fahrzeugquerrichtung verlaufenden Länge des ungeraden, zweiten Längenbereichs in Fahrzeuglängsrichtung nach hinten durch das korrespondierende, sich in seiner Geradeausstellung befindende Rad überdeckt ist. Umgekehrt ausgedrückt ist es vorzugsweise vorgesehen, dass in der Einbaulage des Radspoilers das Rad beziehungsweise zumindest ein Teil des Rads in Fahrzeuglängsrichtung nach vorne hin durch mehr als die in Fahrzeugquerrichtung betrachtete Hälfte des zweiten Längenbereichs beziehungsweise dessen Länge in Fahrzeuglängsrichtung nach vorne hin überlappt beziehungsweise überdeckt ist, wodurch sich eine besonders vorteilhafte Aerodynamik realisieren lässt. Der überwiegende Teil der Länge des zweiten Längenbereiches wird auch als erster Teil bezeichnet.

Bei einer weiteren, besonders vorteilhaften Ausführungsform der Erfindung ist es vorgesehen, dass in der Einbaulage des Radspoilers ein sich in Fahrzeugquerrichtung nach innen an den ersten Teil direkt anschließender, zweiter Teil der Länge des ungeraden, zweiten Längenbereiches in Fahrzeugquerrichtung nach innen versetzt zu dem sich in seiner Geradeausstellung befindenden Rad angeordnet ist. Hierdurch kann die Radumströmung besonders vorteilhaft beeinflusst werden.

Ein zweiter Aspekt der Erfindung betrifft einen vorzugsweise als Personenkraftwagen ausgebildeten Kraftwagen, welcher wenigstens eine Luftleiteinrichtung gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile und Einzelheiten der Erfindung ergeben sich aus der nachfolgenden Beschreibung sowie anhand der Zeichnung. Dabei zeigt:

Fig. 1    ausschnittsweise eine schematische Seitenansicht eines als Personenkraftwagen ausgebildeten Kraftwagens, welcher eine Luftleiteinrichtung mit einem Radspoiler umfasst, der eine Luftleitkante mit einem geraden, ersten Längenbereich und einem ungeraden, zweiten Längenbereich aufweist, der sich in Einbaulage des Radspoilers in Fahrzeugquerrichtung nach außen hin direkt an den ersten Längenbereich anschließt;

Fig. 2    eine schematische Vorderansicht der Luftleiteinrichtung; und

Fig. 3    eine vergrößere Darstellung eines in Fig. 2 mit B bezeichneten Bereichs der Luftleiteinrichtung.

In den Figuren sind gleiche oder funktionsgleiche Elemente mit gleichen Bezugszeichen versehen.

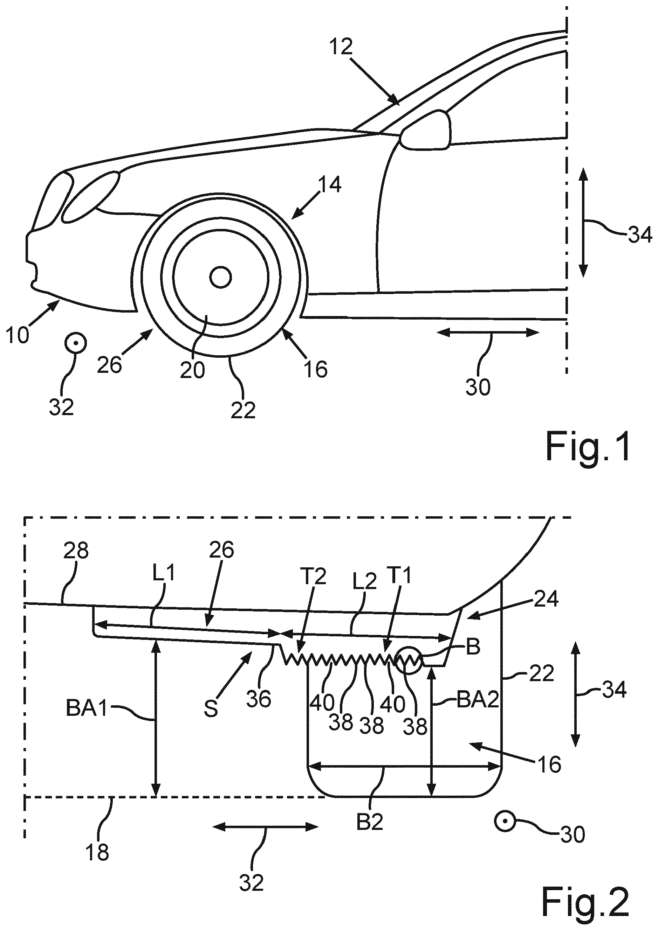

Fig. 1 zeigt ausschnittsweise in einer schematischen Seitenansicht einen als Personenkraftwagen 10 ausgebildeten Kraftwagen, dessen als selbsttragende Karosserie ausgebildeter Aufbau mit 12 bezeichnet ist. Der Aufbau 12 begrenzt einen auch als Fahrgastzelle oder Fahrgastraum bezeichneten Innenraum des Personenkraftwagens 10, in dessen Innenraum sich während einer Fahrt des Personenkraftwagens 10 Insassen, wie beispielsweise der Fahrer des Personenkraftwagens 10, aufhalten können. In Fig. 1 ist auch ein Radhaus 14 des Personenkraftwagens 10 erkennbar. In dem Radhaus 14 ist zumindest teilweise ein vorliegend als Vorderrad, insbesondere als linkes Vorderrad, ausgebildetes und auch als Fahrzeugrad bezeichnetes Rad 16 des Personenkraftwagens 10 aufgenommen. Das Rad 16 ist ein Bodenkontaktelement, über welches der Personenkraftwagen 10 - wie in Zusammenschau mit Fig. 2 erkennbar ist - in Fahrzeughochrichtung nach unten hin an einem vorzugsweise zumindest im Wesentlichen horizontalen Boden 18 abstützbar oder abgestützt ist. Das Rad 16 umfasst eine Felge 20 und einen auf die Felge 20 aufgezogenen Reifen 22, welcher den Boden 18 direkt berührt. Fig. 1 und 2 zeigen den Personenkraftwagen 10 in dessen Stillstand sowie in vollständig hergestelltem Zustand. Außerdem befindet sich das lenkbare Rad 16 in seiner Geradeausstellung, mittels welcher eine Geradeausfahrt des Personenkraftwagens 10 bewirkbar ist beziehungsweise bewirkt wird, insbesondere wenn der Personenkraftwagen 10 mittels wenigstens eines Motors gefahren und dadurch entlang des Bodens 18 vorwärts gefahren wird. Bei dieser Vorwärtsfahrt rollt das Rad 16, insbesondere der Reifen 22, direkt an dem Boden 18 ab.

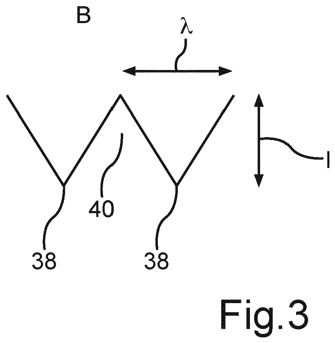

Wie besonders gut in Zusammenschau mit Fig. 2 und 3 erkennbar ist, weist der Personenkraftwagen 10 eine Luftleiteinrichtung 24 mit wenigstens einem Radspoiler 26 auf, welcher in vollständig hergestelltem Zustand des Personenkraftwagens 10 in Fahrzeuglängsrichtung vor dem korrespondierenden Rad 16 angeordnet ist. Der Radspoiler 26 steht in seiner in Fig. 1 bis 3 veranschaulichten Einbaulage gegenüber einem an den Radspoiler 26 angrenzenden Unterbodenbereich 28 des Personenkraftwagens 10 in Fahrzeughochrichtung nach unten ab, wobei der Radspoiler 26 seine Einbaulage in vollständig hergestelltem Zustand des Personenkraftwagens 10 einnimmt. Während die Fahrzeuglängsrichtung durch einen Doppelpfeil 30 veranschaulicht ist, ist die Fahrzeugquerrichtung durch einen Doppelpfeil 32 und die Fahrzeughochrichtung durch einen Doppelpfeil 34 veranschaulicht. Die Fahrzeuglängsrichtung wird auch als x-Richtung bezeichnet, während die Fahrzeugquerrichtung auch als y-Richtung und die Fahrzeughochrichtung auch als z-Richtung bezeichnet wird.

Wie besonders gut aus Fig. 2 erkennbar ist, weist der Radspoiler 26 an seiner in der Einbaulage des Radspoilers 26 in Fahrzeughochrichtung nach unten weisenden oder gewandten Seite S, welche auch als Unterseite bezeichnet wird, eine Luftleitkante 36 auf. Bei dem in den Figuren gezeigten Ausführungsbeispiel endet der Radspoiler 26 in Fahrzeughochrichtung nach unten hin an der auch als Unterkante bezeichneten Luftleitkante 36. Die Luftleitkante 36 weist einen geraden, ersten Längenbereich L1 und einen sich in der Einbaulage des Radspoilers 26 in Fahrzeugquerrichtung direkt an den geraden, ersten Längenbereich L1 anschließenden, ungeraden, zweiten Längenbereich L2 auf. Es ist ferner erkennbar, dass das Rad 16 eine in Fahrzeugquerrichtung verlaufende Breite B2 aufweist, wobei mehr als die Hälfte der in Fahrzeugquerrichtung verlaufenden Breite B2 des Rads 16 in Fahrzeuglängsrichtung nach vorne hin durch den Radspoiler 26 überlappt beziehungsweise überdeckt ist.

Um nun eine besonders vorteilhafte Radumströmung und somit eine besonders vorteilhafte Aerodynamik des Personenkraftwagens 10 realisieren zu können, schließt sich der gerade, erste Längenbereich L1 in der Einbaulage des Radspoilers 26 und somit in vollständig hergestelltem Zustand des Personenkraftwagens 10 in Fahrzeugquerrichtung nach innen hin direkt an den ungeraden, zweiten Längenbereich L2 an. Außerdem ist der ungerade, zweite Längenbereich L2 in der Einbaulage des Radspoilers 26 in Fahrzeuglängsrichtung nach hinten hin zumindest teilweise, insbesondere zumindest überwiegend und somit zumindest zu mehr als zur Hälfte, durch das korrespondierende, sich in seiner Geradeausstellung befindende Rad 16 überdeckt.

Bei dem in den Figuren gezeigten Ausführungsbeispiel ist es vorgesehen, dass zumindest mehr als die Hälfte der sich in Fahrzeugquerrichtung erstreckenden Breite B des Rads 16 in Fahrzeuglängsrichtung nach vorne hin durch einen ungeraden, zweiten Längenbereich L2 überlappt beziehungsweise überdeckt ist.

Ein Bereich der Luftleiteinrichtung 24, insbesondere des Radspoilers 26, ist in Fig. 2 mit B bezeichnet. Der Bereich B ist in Fig. 3 vergrößert dargestellt. Wie besonders gut aus Fig. 2 und 3 erkennbar ist, weist der ungerade, zweite Längenbereich L2 mehrere, in der Einbaulage des Radspoilers 26 in Fahrzeugquerrichtung abwechselnd aufeinanderfolgende Erhebungen 38 und Vertiefungen 40 auf, wobei die jeweilige Vertiefung 40 in Fahrzeugquerrichtung nach außen hin beidseitig durch jeweils genau zwei in Fahrzeugquerrichtung benachbarte Erhebungen 38 begrenzt ist. Mit anderen Worten ist die jeweilige Vertiefung 40 in Fahrzeugquerrichtung zwischen zwei in Fahrzeugquerrichtung benachbarten Erhebungen 38 angeordnet. Die Erhebungen 38 laufen in Fahrzeughochrichtung nach unten hin spitz zu und enden an einer Spitze, so dass umgekehrt sich die jeweilige Vertiefung 40 in Fahrzeughochrichtung nach oben hin verjüngt und an ihrem in Fahrzeughochrichtung oberen Ende ebenfalls spitz ist. Dadurch ist der Längenbereich L2 gezackt beziehungsweise zick-zack-förmig ausgebildet. Dadurch kann eine besonders vorteilhafte Radumströmung realisiert werden. Unter der Radumströmung ist zu verstehen, dass bei einer Vorwärtsfahrt des Personenkraftwagens 10 und dabei insbesondere bei einer Geradeausfahrt des Personenkraftwagens 10 Luft das Rad 16 umströmt. Die das Rad 16 umströmende Luft beziehungsweise deren Strömung kann mittels des Radspoilers 26 und dabei insbesondere mittels des Längenbereichs L2 besonders vorteilhaft beeinflusst beziehungsweise eingestellt werden, so dass eine besonders vorteilhafte Aerodynamik darstellbar ist.

Aus Fig. 3 ist erkennbar, dass die jeweilige Erhebung 38 und somit die jeweilige Vertiefung 40 eine Höhe I und eine Breite λ aufweist. Die Höhe I verläuft entlang einer ersten Richtung, und die Breite λ verläuft entlang einer zweiten Richtung, welche senkrecht zur ersten Richtung verläuft. Die erste Richtung kann parallel zur Fahrzeughochrichtung oder leicht schräg dazu verlaufen. Alternativ oder zusätzlich kann die zweite Richtung parallel zur Fahrzeugquerrichtung oder leicht schräg dazu verlaufen. Die erste Richtung und die zweite Richtung spannen eine erste Ebene auf, welche parallel zu einer auch als y-z-Ebene bezeichneten zweiten Ebene verläuft oder mit der zweiten Ebene (y-z-Ebene) zusammenfällt, wobei die zweite Ebene durch die Fahrzeugquerrichtung (y-Richtung) und die Fahrzeughochrichtung (z-) aufgespannt ist. Somit verläuft die Fahrzeuglängsrichtung (x-Richtung) senkrecht zu der ersten Ebene und somit senkrecht zu der ersten Richtung und senkrecht zu der zweiten Richtung. Dabei ist es vorzugsweise vorgesehen, dass der Quotient aus der Breite λ und der Höhe I in einem Bereich von einschließlich 0,5 bis einschließlich 2 liegt.

Des Weiteren ist erkennbar, dass in der Einbaulage des Radspoilers 26 ein überwiegender, erster Teil einer in Fahrzeugquerrichtung beziehungsweise in der zuvor genannten, ersten Ebene verlaufenden Länge des ungeraden, zweiten Längenbereichs L2 in Fahrzeuglängsrichtung nach hinten durch das korrespondierende, sich in seiner Geradeausstellung befindende Rad 16 überdeckt beziehungsweise umgekehrt. Der überwiegende, erste Teil ist in Fig. 2 mit T1 bezeichnet. In Fahrzeugquerrichtung nach innen hin schließt sich direkt an den ersten Teil T1 der Länge des Längenbereichs L2 ein zweiter Teil T2 der Länge des Längenbereichs L2 an, wobei der zweite Teil T2 wesentlich geringer und insbesondere weniger als die Hälfte, insbesondere weniger als ein Drittel, des ersten Teils T1 beträgt. Es ist erkennbar, dass der zweite Teil T2 in Fahrzeugquerrichtung nach innen hin versetzt zu dem Rad 16 angeordnet ist, so dass das Rad 16 in Fahrzeuglängsrichtung nach vorne hin nicht durch den zweiten Teil T2 überlappt beziehungsweise überdeckt ist. Außerdem ist in der Einbaulage des Radspoilers 26 der gerade, erste Längenbereich L1, welcher sich in Fahrzeugquerrichtung nach innen hin unmittelbar und somit direkt an den zweiten Teil T2 anschließt, vollständig in Fahrzeugquerrichtung nach innen hin versetzt zu dem sich in seiner Geradeausstellung befindenden Rad 16 angeordnet, so dass das Rad 16 in seiner Geradeausstellung in Fahrzeuglängsrichtung nach vorne hin nicht durch den Längenbereich L1 überlappt beziehungsweise überdeckt ist.

Des Weiteren ist es vorgesehen, dass in der in den Figuren gezeigten Einbaulage des Radspoilers 26 ein in Fahrzeughochrichtung verlaufender, erster Bodenabstand BA1 zwischen dem einen geraden Unterkantenteil darstellenden, geraden, ersten Längenbereich L1 und dem Boden 18 größer ist als ein in Fahrzeughochrichtung verlaufender, zweiter Bodenabstand BA2 zwischen dem einen ungeraden Unterkantenteil darstellenden, ungeraden, zweiten Längenbereich L2 und dem Boden 18. Hierdurch kann eine besonders vorteilhafte Aerodynamik dargestellt werden.

## Patentansprüche

1. Luftleiteinrichtung (24) für einen Kraftwagen (10), mit wenigstens einem in Fahrzeuglängsrichtung (30) vor einem korrespondierenden Rad (16) des Kraftwagens (10) anordenbaren Radspoiler (26), welcher in seiner Einbaulage gegenüber einem angrenzenden Unterbodenbereich (28) des Kraftwagens (10) in Fahrzeughochrichtung (34) nach unten absteht und an seiner nach unten gewandten Seite (S) eine in Fahrzeugquerrichtung verlaufende Luftleitkante (36) aufweist, welche wenigstens einen geraden, ersten Längenbereich (L1) und einen sich in der Einbaulage des Radspoilers (26) in Fahrzeugquerrichtung (32) direkt an den geraden, ersten Längenbereich (L1) anschließenden, ungeraden, zweiten Längenbereich (L2) aufweist, wobei sich der gerade, erste Längenbereich (L1) in der Einbaulage des Radspoilers (26) in Fahrzeugquerrichtung (32) nach innen direkt an den ungeraden, zweiten Längenbereich (L2) anschließt, welcher in der Einbaulage des Radspoilers (26) in Fahrzeuglängsrichtung (30) nach hinten zumindest teilweise durch das korrespondierende, sich in seiner Geradeausstellung befindende Rad (16) überdeckt ist, und wobei der ungerade, zweite Längenbereich (L2) mehrere, in der Einbaulage des Radspoilers (26) in Fahrzeugquerrichtung (32) abwechselnd aufeinanderfolgende Erhebungen (38) und Vertiefungen (40) aufweist, wobei der ungerade, zweite Längenbereich (L2) gezackt ausgebildet ist, **dadurch gekennzeichnet, dass** in der Einbaulage des Radspoilers (26) der gerade, erste Längenbereich (L1) vollständig in Fahrzeugquerrichtung (32) nach innen versetzt zu dem sich in seiner Geradeausstellung befindenden Rad (16) angeordnet ist und dass in der Einbaulage des Radspoilers (26) eine sich in Fahrzeugquerrichtung (32) erstreckende Breite (B2) des sich in seiner Geradeausstellung befindenden Rads (16) zumindest überwiegend in Fahrzeuglängsrichtung (30) nach vorne durch den ungeraden, zweiten Längenbereich (L2) überdeckt ist.

2. Luftleiteinrichtung (24) nach Anspruch 1, **dadurch gekennzeichnet, dass** die jeweilige Erhebung (38) und/oder die jeweilige Vertiefung (40) eine Höhe (I) und eine senkrecht dazu verlaufende Breite ($\lambda$) aufweist, wobei der Quotient aus der Breite ($\lambda$) als Dividend und der Höhe (I) als Divisor in einem Bereich von einschließlich 0,5 bis einschließlich 2 liegt.

3. Luftleiteinrichtung (24) nach einem der vorhergehenden Ansprüche, **dadurch gekennzeichnet, dass** in der Einbaulage des Radspoilers (26) ein in Fahrzeughochrichtung (34) verlaufender erster Abstand (BA1) zwischen dem geraden, ersten Längenbereich (L1) und einem Boden (18), an welchem der Kraftwagen (10) über das Rad (16) in Fahrzeughochrichtung (34) nach unten abgestützt ist, größer ist als ein in Fahrzeughochrichtung (34) verlaufender zweiter Abstand (BA2) zwischen dem ungeraden, zweiten Längenbereich (L2) und dem Boden (18).

4. Luftleiteinrichtung (24) nach einem der vorhergehenden Ansprüche, **dadurch gekennzeichnet, dass** in der Einbaulage des Radspoilers (26) zumindest ein überwiegender Teil (T1) einer in Fahrzeugquerrichtung (32) verlaufenden Länge des ungeraden, zweiten Längenbereiches (L2) in Fahrzeuglängsrichtung (30) nach hinten durch das korrespondierende, sich in seiner Geradeausstellung befindende Rad (16) überdeckt ist.

5. Luftleiteinrichtung (24) nach Anspruch 4, **dadurch gekennzeichnet, dass** in der Einbaulage des Radspoilers (26) ein sich in Fahrzeugquerrichtung nach innen an den Teil (T1) direkt anschließender, zweiter Teil (T2) der Länge des ungeraden, zweiten Längenbereiches (L2) in Fahrzeugquerrichtung nach innen versetzt zu dem sich in seiner Geradeausstellung befindenden Rad (16) angeordnet ist.

6. Kraftwagen (10), mit wenigstens einer Luftleiteinrichtung (24) nach einem der vorhergehenden Ansprüche.

**Claims**

1. Air guiding device (24) for a motor vehicle (10), comprising at least one wheel spoiler (26) which can be arranged in the vehicle longitudinal direction (30) in front of a corresponding wheel (16) of the motor vehicle (10), which wheel spoiler, in its installed position, projects downward in the vehicle vertical direction (34) relative to an adjacent underbody region (28) of the motor vehicle (10) and has, on its downward-facing side (S), an air guiding edge (36) which runs in the vehicle transverse direction and which has at least one straight, first length region (L1) and a non-straight, second length region (L2) which, in the installed position of the wheel spoiler (26), directly adjoins the straight, first length region (L1) in the vehicle transverse direction (32), the straight, first length region (L1) in the installed position of the wheel spoiler (26) directly adjoining the non-straight, second length region (L2) inwardly in the vehicle transverse direction (32) which non-straight second length region, in the installed position of the wheel spoiler (26), is at least partially covered to the rear in the vehicle longitudinal direction (30) by the corresponding wheel (16) located in its straight-ahead position, and the non-straight, second length region (L2) having a plurality of elevations (38) and depressions (40) alternating in succession in the vehicle transverse direction (32) in the installed position of the wheel spoiler (26), the non-straight, second length region (L2) being jagged, **characterized in that** in the installed position of the wheel spoiler (26), the straight, first length region (L1) is arranged completely offset inwardly in the vehicle transverse direction (32) relative to the wheel (16) located in its straight-ahead position **and in that** in the installed position of the wheel spoiler (26), a width (B2) extending in the vehicle transverse direction (32) of the wheel in its straight-ahead position (16) is covered at least predominantly in the vehicle longitudinal direction (30) to the front by the non-straight, second length region (L2).

2. Air guiding device (24) according to claim 1,

**characterized in that** the relevant elevation (38) and/or the relevant depression (40) has a height (I) and a width (λ) running perpendicularly thereto, the quotient of the width (λ) as the dividend and the height (I) as the divisor lying in a range from 0.5 to 2 inclusive.

3. Air guiding device (24) according to either of the preceding claims,
   **characterized in that** in the installed position of the wheel spoiler (26), a first distance (BA1) running in the vehicle vertical direction (34) between the straight, first length region (L1) and a piece of ground (18) on which the motor vehicle (10) is supported downward in the vehicle vertical direction (34) via the wheel (16) is greater than a second distance (BA2) running in the vehicle vertical direction (34) between the non-straight, second length region (L2) and the ground (18).

4. Air guiding device (24) according to any of the preceding claims,
   **characterized in that** in the installed position of the wheel spoiler (26), at least a predominant part (T1) of a length of the non-straight, second length region (L2) running in the vehicle transverse direction (32) is covered to the rear in the vehicle longitudinal direction (30) by the corresponding wheel (16) located in its straight-ahead position.

5. Air guiding device (24) according to claim 4,
   **characterized in that** in the installed position of the wheel spoiler (26), a second part (T2) of the length of the non-straight, second length region (L2) directly adjoining the part (T1) inwardly in the vehicle transverse direction is arranged offset inwardly in the vehicle transverse direction relative to the wheel (16) which is located in its straight-ahead position.

6. Motor vehicle (10) comprising at least one air guiding device (24) according to any of the preceding claims.

**Revendications**

1. Dispositif de guidage d'air (24) pour un véhicule à moteur (10), comportant au moins un déflecteur de roue (26) pouvant être agencé dans la direction de la longueur de véhicule (30) devant une roue (16) correspondante du véhicule à moteur (10), lequel déflecteur, dans sa position de montage, fait saillie vers le bas dans la direction de la hauteur de véhicule (34) par rapport à une zone de dessous de caisse (28) adjacente du véhicule à moteur (10) et présente sur son côté (S) tourné vers le bas un bord de guidage d'air (36) s'étendant dans la direction transversale de véhicule, lequel bord présente au moins une première zone de longueur (L1) droite et une seconde zone de longueur (L2) non droite se raccordant directement à la première zone de longueur (L1) droite dans la position de montage du déflecteur de roue (26) dans la direction transversale de véhicule (32), dans lequel la première zone de longueur (L1) droite se raccorde directement à la seconde zone de longueur (L2) non droite vers l'intérieur dans la position de montage du déflecteur de roue (26) dans la direction transversale de véhicule (32), laquelle seconde zone, dans la position de montage du déflecteur de roue (26) dans la direction de longueur de véhicule (30), est au moins partiellement recouverte vers l'arrière par la roue (16) correspondante se trouvant dans sa position droite, et la seconde zone de longueur (L2) non droite présente plusieurs élévations (38) et creux (40) se succédant en alternance dans la direction transversale de véhicule (32) dans la position de montage du déflecteur de roue (26), dans lequel la seconde zone de longueur (L2) non droite est conçue en forme de dents, **caractérisé en ce que,** dans la position de montage du déflecteur de roue (26), la première zone de longueur (L1) droite est agencée complètement décalée vers l'intérieur dans la direction transversale de véhicule (32) par rapport à la roue (16) se trouvant dans sa position droite, **et en ce que**, dans la position de montage du déflecteur de roue (26), une largeur (B2), s'étendant dans la direction transversale de véhicule (32), de la roue (16) se trouvant dans sa position droite est recouverte au moins principalement vers l'avant dans la direction de longueur de véhicule (30) par la seconde zone de longueur (L2) non droite.

2. Dispositif de guidage d'air (24) selon la revendication 1,
   **caractérisé en ce que** l'élévation (38) respective et/ou le creux (40) respectif présente une hauteur (I) et une largeur (λ) perpendiculaire à celle-ci, dans lequel le quotient de la largeur (λ) en tant que dividende et de la hauteur (1) en tant que diviseur se situe dans une plage de 0,5 inclus à 2 inclus.

3. Dispositif de guidage d'air (24) selon l'une des revendications précédentes,
   **caractérisé en ce que,** dans la position de montage du déflecteur de roue (26), une première distance (BA1) s'étendant dans la direction de hauteur de véhicule (34) entre la première zone de longueur (L1) droite et un plancher (18), sur lequel le véhicule à moteur (10) est appuyé vers le bas par l'intermédiaire de la roue (16) dans la direction de hauteur de véhicule (34), est supérieure à une seconde distance (BA2) s'étendant dans la direction de hauteur du véhicule (34) entre la seconde zone de longueur (L2) non droite et le plancher (18).

4. Dispositif de guidage d'air (24) selon l'une des revendications précédentes,
**caractérisé en ce que,** dans la position de montage du déflecteur de roue (26), au moins une partie prépondérante (T1) d'une longueur, s'étendant dans la direction transversale de véhicule (32), de la seconde zone de longueur (L2) non droite est recouverte vers l'arrière dans la direction de longueur de véhicule (30) par la roue (16) correspondante se trouvant dans sa position droite.

5.  Dispositif de guidage d'air (24) selon la revendication 4,
**caractérisé en ce que,** dans la position de montage du déflecteur de roue (26), une seconde partie (T2) de la longueur de la seconde zone de longueur (L2) non droite, se raccordant directement à la partie (T1) vers l'intérieur dans la direction transversale de véhicule, est agencée décalée vers l'intérieur dans la direction transversale de véhicule par rapport à la roue (16) se trouvant dans sa position droite.

6.  Véhicule à moteur (10), comportant un dispositif de guidage d'air (24) selon l'une des revendications précédentes.

Fig.1

Fig.2

B

$\lambda$

I

40

38        38

# Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009040678 A1